# FASCICULE DE BREVET EUROPEEN

(11) **EP 1 778 969 B1**
(45) Date de publication et mention de la délivrance du brevet: **10.09.2008**
(21) Numéro de dépôt: 05788611.1
(22) Date de dépôt: 11.07.2005
(51) Int. Cl.: F02M 61/14, F16K 27/02

(54) **CARTOUCHE POUR VANNE DE CONTRÔLE D'UN FLUX DE FLUIDE, VANNE ÉQUIPÉE D'UNE TELLE CARTOUCHE ET MOTEUR COMPORTANT LADITE VANNE**
KARTUSCHE FÜR EIN STRÖMUNGSVENTIL, VENTIL DAMIT UND MOTOR MIT DIESEM VENTIL
CARTRIDGE FOR FLUID FLOW CONTROL VALVE, VALVE EQUIPPED WITH SAME AND ENGINE COMPRISING SAID VALVE

(30) Priorité: 12.07.2004 FR 0407739
(43) Date de publication de la demande: 02.05.2007
(73) Titulaire: Wartsila France S.A.S., 68100 Mulhouse (FR)
(72) Inventeur: ROLLAND, Guillaume, F-68400 Riedisheim (FR); SCHULLER, Stéphane, 68100 Mulhouse (FR); TREMOUILHAC, Jean, F-68350 Didenheim (FR); KAEMMERLEN, Thibault, F-68490 Petit Landau (FR)
(74) Mandataire: Nithardt, Roland
(86) Numéro de dépôt international: PCT/FR2005/001784
(87) Numéro de publication internationale: WO 2006/016056

(56) Documents cités:
- DE-A1- 10 300 414
- GB-A- 2 147 949
- US-A- 5 398 724
- US-A- 5 645 226
- US-A- 5 934 766
- US-B1- 6 168 136
- US-B1- 6 182 943

## Description

La présente invention concerne une cartouche pour vanne de contrôle d'un flux de fluide, notamment pour un moteur à gaz, cette cartouche comportant un corps creux comprenant une chambre de distribution dans laquelle débouchent au moins un orifice d'entrée et au moins un orifice de sortie, des organes d'étanchéité disposés au moins de part et d'autre dudit orifice d'entrée à la périphérie dudit corps, au moins un clapet logé dans ladite chambre de distribution et couplé à un actionneur agencé pour déplacer ledit clapet entre au moins une position ouverte dans laquelle lesdits orifices d'entrée et de sortie communiquent pour autoriser l'écoulement du fluide et une position fermée dans laquelle lesdits orifices d'entrée et de sortie ne communiquent pas pour interdire cet écoulement, ladite cartouche formant une pièce monobloc de sorte à constituer une partie interchangeable de ladite vanne, destinée à être montée de manière amovible dans une partie fixe de cette vanne. L'invention concerne également une vanne de contrôle d'un flux de fluide équipée d'une telle cartouche ainsi qu'un moteur, notamment à gaz, équipé d'une telle vanne, ce moteur comportant au moins une rampe d'alimentation de fluide et des moyens d'introduction du fluide dans les cylindres dudit moteur.

Dans le cas, par exemple, des moteurs alternatifs industriels fonctionnant au gaz, il est connu d'utiliser des électrovannes pour injecter une quantité précise de gaz dans les cylindres de ces moteurs. On prévoit alors une électrovanne d'admission de gaz par cylindre, soit par exemple 18 électrovannes pour un moteur de 18 cylindres. Traditionnellement, ces électrovannes sont montées en un seul bloc sur la culasse des moteurs et leur entrée de gaz est raccordée à une rampe d'alimentation de gaz commune à une rangée de cylindres, comme divulgué dans la publication US-A-5,398,724, ou sont montées directement dans la rampe d'alimentation de gaz commune, comme divulgué dans les publications US-A-6,168,136 et US-A-6,182,943. Les électrovannes connues ne comportant pas de moyens de filtration du gaz intégrés, il est par conséquent nécessaire d'ajouter un élément filtrant externe, interposé généralement entre la rampe d'alimentation de gaz et l'entrée de gaz de chaque électrovanne. Cet élément de filtration est utile pour empêcher l'introduction de corps indésirables, tels que poussières, particules métalliques, etc. susceptibles d'être transportées par le gaz, dans les pièces mécaniques de l'électrovanne et qui nuiraient ainsi au bon fonctionnement de l'électrovanne ou accélèreraient l'usure des pièces mécaniques. En fonction de la nature et de la propreté du gaz, cet élément filtrant s'encrasse plus ou moins vite. Il faut donc le nettoyer ou le remplacer à intervalles fréquents. De même, les parties mécaniques de ces électrovannes sont soumises à des fréquences élevées de cycle de fonctionnement ouvert/fermé, par exemple 12,5 cycles par seconde pour un moteur tournant à 1500 tr/mn. La durée de vie de ces électrovannes est donc limitée à quelques milliers d'heures et il faut remplacer régulièrement soit les pièces d'usure, soit l'électrovanne dans sa globalité. Pour effectuer ces interventions de maintenance, il est par conséquent indispensable de démonter toute la rampe d'alimentation de gaz, d'une part, puis l'ensemble des électrovannes des culasses du moteur, d'autre part. Du fait de ces contraintes de démontage, les opérations de maintenance de ce type d'électrovannes sont longues et onéreuses. Ce coût élevé pénalise fortement le coût global des moteurs à gaz limitant par conséquent leur exploitation. A titre d'exemple, la maintenance de 18 électrovannes nécessite au minimum une demi-journée d'immobilisation du moteur.

Le but de l'invention est de pallier ces inconvénients en apportant une solution simple et économique permettant d'assurer une maintenance efficace et rapide, sans avoir besoin de démonter l'ensemble des vannes, ni la rampe d'alimentation de fluide, pour élargir l'éventail de marchés accessibles par exemple à ces moteurs à gaz. Bien entendu, la solution proposée s'étend à tout type de vanne, pour distribuer tout type de fluide dans tout type de moteur, machine, brûleur, etc. nécessitant un dosage du fluide précis. A titre d'exemple, la maintenance de 18 électrovannes, selon l'invention, peut être effectuée en moins d'une heure.

Dans ce but, l'invention concerne une cartouche du genre indiqué en préambule,
caractérisée en ce que
un sous-ensemble dudit clapet comporte une pièce intermédiaire et un plateau magnetique couplé audit clapet et un sous-ensemble actionneur comporte au moins une bobine électromagnétique, un entrefer étant defini entre ledit plateau et ladite bobine, lesdits sous-ensembles étant montés dans ledit corps de manière démontable, la pièce intermédiaire délimitant ladite chambre de distribution et comportant un logement dans lequel se déplace ledit clapet et des orifices de passage agencés pour mettre en communication ledit orifice d'entrée avec ladite chambre de distribution, cette pièce intermédiaire étant agencée pour définir ledit entrefer et en ce que ledit corps comporte en périphérie au moins un organe filtrant disposé au moins en amont dudit orifice d'entrée et monté de manière amovible sur ledit corps.

Dans ce but également, l'invention concerne une vanne du genre indiqué en préambule, caractérisée en ce qu'elle est constituée d'au moins une partie fixe destinée à être fixée à demeure sur ledit moteur et comportant au moins les entrée et sortie de fluide, et d'au moins une partie amovible formant une cartouche interchangeable telle que définie ci-dessus.

Dans ce but aussi, l'invention concerne un moteur du genre indiqué en préambule, caractérisé en ce qu'il comporte, pour au moins un cylindre, au moins une vanne de contrôle du flux de gaz telle que définie ci-dessus.

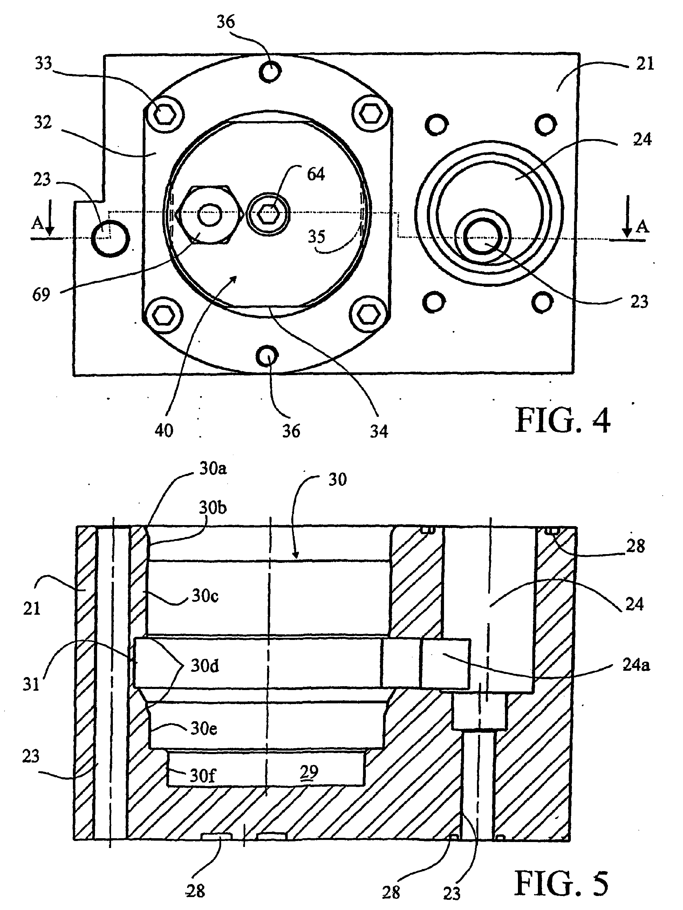

La présente invention et ses avantages apparaîtront mieux dans la description suivante d'un mode de réalisation donné à titre d'exemple non limitatif, en référence aux dessins annexés, dans lesquels:
- la figure 1 est une vue d'implantation d'une vanne selon l'invention sur un moteur,
- la figure 2 est une vue en coupe de la vanne selon l'invention,
- la figure 3 est une vue en perspective éclatée de la cartouche selon l'invention contenue dans la vanne de la figure 2,
- la figure 4 est une vue de dessus de la vanne de la figure 2,
- la figure 5 est une vue en coupe selon l'axe AA de la figure 4 du bloc support de la vanne,
- la figure 6A est une vue de dessous du clapet et la figure 6B est une vue de dessus du diffuseur de la vanne de la figure 2, et
similaires, logés dans des alésages traversants 23 par exemple au nombre de deux. Cette partie fixe 20 comporte également une entrée de fluide 24 destinée à être raccordée à la rampe d'alimentation 3 par tout moyen conventionnel et une sortie de fluide 25 destinée à être raccordée au circuit d'injection du moteur 1 par l'intermédiaire d'un tube diffuseur 26, par exemple rapporté par vissage dans le bloc support 21. Des organes d'étanchéité 27, tels que par exemple des joints toriques, logés dans des rainures 28 correspondantes du bloc support 21 (cf. fig. 5), sont prévus notamment dans les zones de raccordement des entrée 24 et sortie 25 de fluide pour éviter toute fuite de fluide. Plus précisément, dans l'exemple représenté, les organes d'étanchéité 27 sont disposés autour de l'entrée de fluide 24 entre le bloc support 21 et la rampe d'alimentation 3, autour de la sortie de fluide 25 entre le bloc support 21 et la culasse 2 du moteur et autour de l'organe de fixation 22 situé au niveau de l'entrée de fluide 24 entre le bloc support 21 et la culasse 2 du moteur. Cet exemple n'est pas limitatif, d'autres configurations étant possibles en fonction de l'application concernée. Une fois assemblé au moteur 1, la partie fixe 20 de la vanne 10 n'est plus susceptible d'être démontée, sauf en cas de démontage du moteur 1 lui-même.

Le bloc support 21 ce cette partie fixe 20 comporte un logement 30 apte à recevoir la cartouche 40 par emboîtement et serrage. Ce logement 30 a par conséquent des formes d'emboîtement complémentaires à celles de la cartouche 40, qui peuvent être par exemple cylindriques. En référence plus particulièrement à la figure 5, ce logement 30 est constitué d'un alésage borgne formé de différents diamètres 30b à 30e, du plus grand au plus petit, et pourvu d'un chanfrein 30a d'entrée facilitant l'introduction de la cartouche 40. L'explication de ces différents diamètres est donnée au fur et à mesure de la description de la cartouche 40. Ce logement 30 est prolongé par un alésage borgne, de plus petit diamètre 30f que le dernier diamètre 30e du logement 30, et délimitant une chambre collectrice 29 de fluide en communication avec la sortie de fluide 25 qui est, dans l'exemple représenté, excentrée par rapport à l'axe médian du logement 30. Une gorge annulaire 31 est également ménagée dans le logement 30 et disposée de manière à communiquer avec l'entrée de fluide 24 pour distribuer le fluide en périphérie du logement 30. A cet effet, l'entrée de fluide 24 communique avec la gorge annulaire 31 par un perçage radial 24a qui peut avoir une forme oblongue, rectangulaire ou autre, augmentant la section de passage du fluide. Des moyens de fixation 32 sont également prévus pour serrer la cartouche 40 dans le fond de son logement 30 et la solidariser au bloc support 21 (cf. fig. 4). Ils se présentent par exemple sous la forme d'une bride de serrage 32 rapportée et fixée par des organes de fixation 33 démontables tels que des vis, des boulons ou similaires. Ces moyens de fixation 32 sont décrits en référence à la cartouche 40.

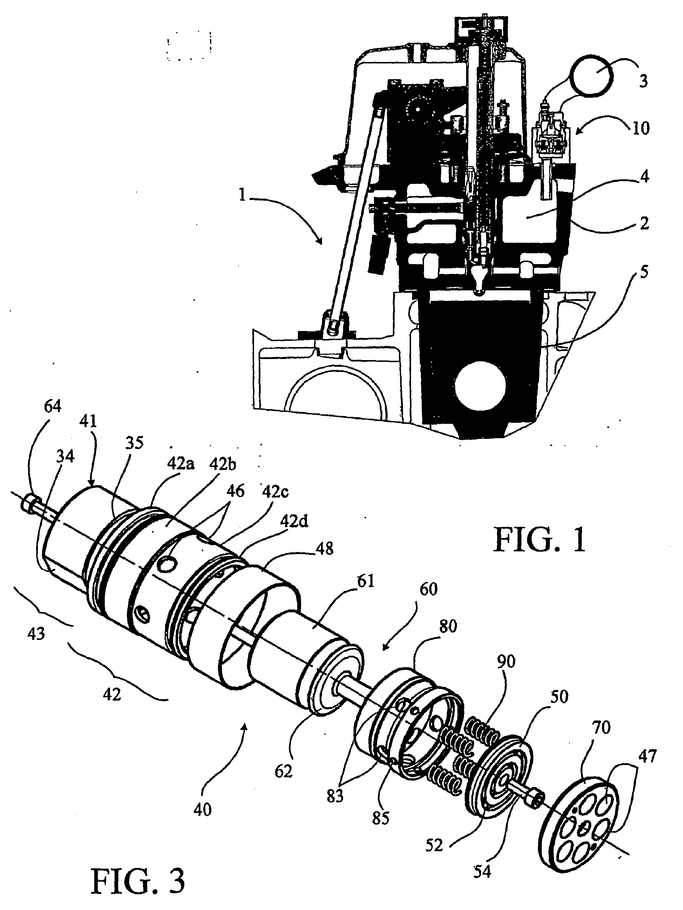

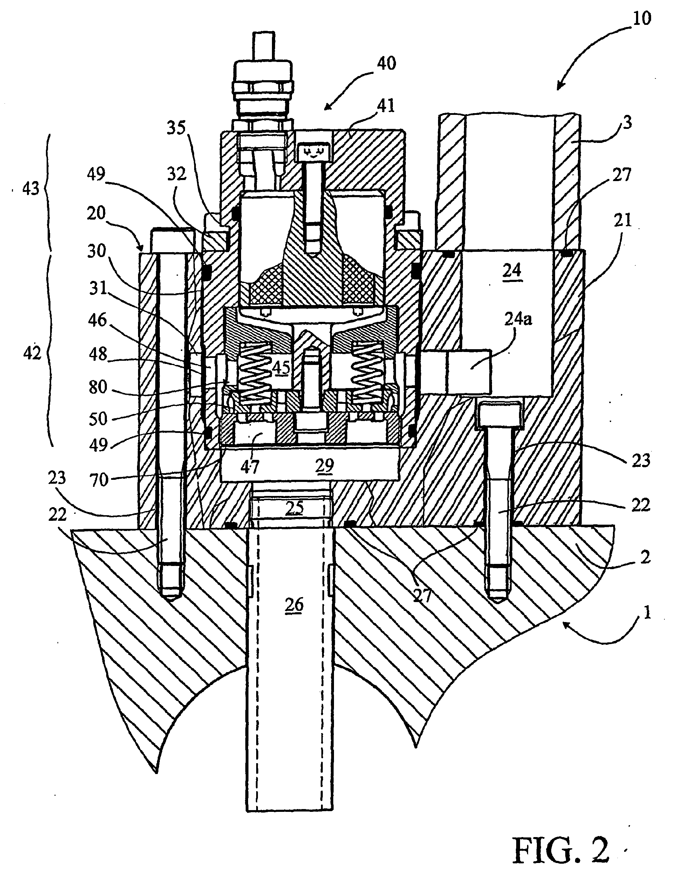

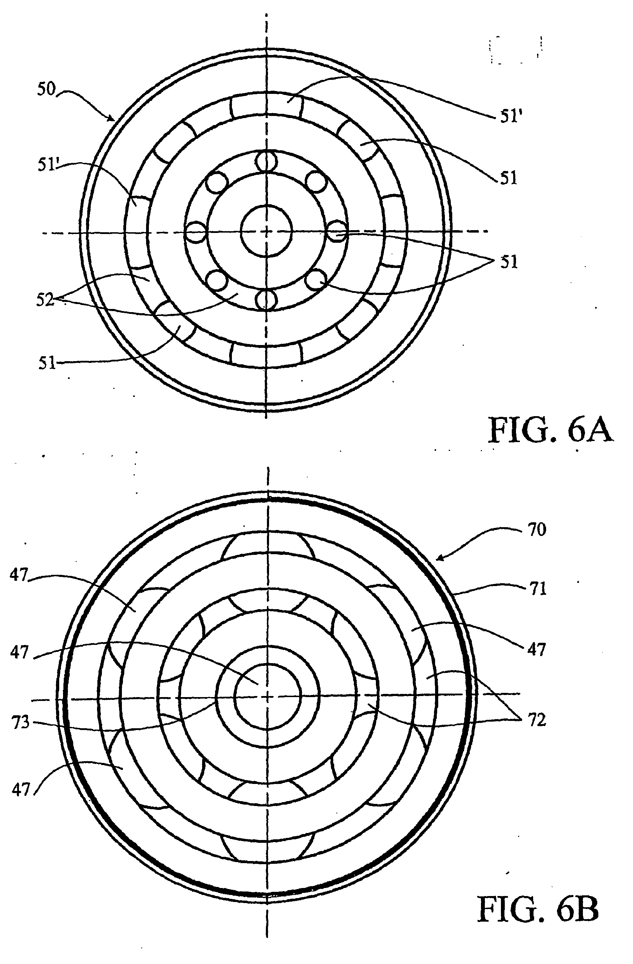

La cartouche 40 est décrite en référence aux figures 2 à 4, 6 et 7. Elle comporte un corps 41 dont une partie forme une base 42 destinée à s'emboîter à l'intérieur du logement 30 du bloc support 21 et une partie forme une tête 43 destinée à rester à l'extérieur du bloc support 21 pour assurer notamment la fixation de la cartouche 40 dans le bloc support 21, en coopération avec la bride de serrage 32. A cet effet, la tête 43 comporte deux méplats 34 latéraux opposés et une rainure 35 périphérique. Le diamètre intérieur de la bride de serrage 32 a une forme oblongue apte à être emboîtée sur la tête 43 parallèlement aux méplats 34 et à être verrouillée dans la rainure 35 en la tournant d'un quart de tour. Après verrouillage, la bride de serrage 32 est fixée solidairement au bloc support 21 avec les organes de fixation 33, par exemple au nombre de quatre. La bride de serrage 32 comporte deux trous taraudés 36 complémentaires, diamétralement opposés et en regard du bloc support 21 qui, lui, ne comporte pas d'alésage en correspondance. Ces trous taraudés 36 sont utilisés pour extraire la cartouche 40 du bloc support 21. Dans ce but et après dévissage des organes de fixation 33, deux sont vissés dans ces deux trous taraudés 36 complémentaires jusqu'en butée contre le bloc support 21 permettant de chasser la cartouche 40 de son logement 30.

La base 42 a une forme extérieure complémentaire à celle du logement 30 et par exemple cylindrique. Elle est également formée de différents diamètres 42a, 42b, 42c du plus grand au plus petit et est terminée par un chanfrein 42d facilitant son introduction dans le logement 30. Le plus grand diamètre 42a vient en correspondance du diamètre 30b, le diamètre suivant 42b vient en correspondance du diamètre 30c et le plus petit diamètre 42c vient en correspondance des diamètres 30d et 30e du logement 30. Des organes d'étanchéité 49, tels que des joints toriques, sont logés dans des rainures périphériques 44 ménagées dans la base 42, notamment au niveau des diamètres extrêmes 42a, 42c en regard des diamètres 30b et 30e du logement 30 qui sont dimensionnés pour assurer un montage serré de ces organes d'étanchéité 49.

Le corps 41 de la cartouche 40 est creux et comporte une chambre de distribution de fluide 45 apte à communiquer avec les entrée 24 et sortie 25 de fluide de la partie fixe 20 de la vanne 10 par des orifices d'entrée 46 et de sortie 47. La cartouche 40 comporte, dans la chambre de distribution de fluide 45, des moyens de contrôle de l'écoulement du fluide disposés entre les orifices d'entrée 46 et de sortie 47. Ces moyens de contrôle de l'écoulement du fluide comportent un clapet 50 couplé à un actionneur 60 agencé pour déplacer le clapet 50 entre au moins une position ouverte dans laquelle les orifices d'entrée 46 et de sortie 47 communiquent pour autoriser l'écoulement du fluide et une position fermée dans laquelle ces orifices 46, 47 ne communiquent pas pour interdire cet écoulement.

Dans l'exemple représenté, la cartouche 40 comporte plusieurs orifices d'entrée 46 disposés radialement et en périphérie du corps 41, au niveau du plus petit diamètre 42c, en regard de la gorge annulaire 31 de la partie fixe 20 communiquant avec l'entrée de fluide 24. Ces orifices d'entrée 46 sont par exemple formés de trous cylindriques ou oblongs offrant une plus grande section de passage de fluide. Un organe filtrant 48 est intercalé entre les orifices d'entrée 46 de la cartouche 40 et la gorge annulaire 31 communiquant avec l'entrée de fluide 24 de la partie fixe 20 de la vanne 10 pour filtrer le fluide et le débarrasser de toute impureté avant son entrée dans la zone fonctionnelle de la vanne 10, c'est-à-dire dans les moyens de contrôle de l'écoulement du fluide prévus dans la cartouche 40. Cet organe filtrant 48 est formé, dans l'exemple représenté, d'un manchon cylindrique emboîté sur le plus petit diamètre 42c du corps 41 disposé en regard du diamètre 30d du logement 30. Il peut être réalisé en toute matière adaptée, telle qu'un treillis métallique, une membrane perforée, un non tissé, etc. Cet organe filtrant 48 fait partie intégrante de la cartouche 40 et est bloqué axialement, dans le sens de l'introduction de la cartouche 40 dans la partie fixe 20 de la vanne 10, par un épaulement 42e reliant les diamètres 42b et 42c. Il est également bloqué dans le sens inverse, lors de l'extraction de la cartouche 40 de la partie fixe 20 de la vanne 10, par l'organe d'étanchéité 49 prévu à l'extrémité de la cartouche 40. Lors du montage de la cartouche 40 dans la partie fixe 20, l'organe filtrant 48 est maintenu par pincement entre l'épaulement 42e et le rayon de raccordement reliant le diamètre 30d au diamètre 30e, de manière à forcer le passage du fluide au travers dudit organe filtrant 48.

Dans l'exemple représenté, la cartouche 40 comporte plusieurs orifices de sortie 47 disposés axialement, en couronne dans une pièce appelée diffuseur 70 qui ferme la base 42 du corps 41 en regard de l'orifice de sortie 25 et délimite également la chambre de distribution 45. Ce diffuseur 70 est par exemple formé d'une pièce en forme de disque, pourvue d'un filetage 71 périphérique apte à se visser dans un taraudage intérieur prévu dans la zone d'extrémité de la base 42. Les orifices de sortie 47 sont formés de lamages qui débouchent à l'extérieur de la cartouche 40, dans la chambre collectrice 29 de fluide, en direction de la sortie de fluide 25 du bloc support 21. Dans sa face plane opposée à celle contenant les orifices de sortie 47, le diffuseur 70 comporte deux rainures 72 circulaires et concentriques, superposées aux orifices de sortie 47 et communiquant avec la chambre de distribution 45. Ce diffuseur 70 comporte également un alésage central 73 formant également un orifice de sortie 47.

Dans l'exemple représenté, le clapet 50 disposé dans la chambre de distribution 45 est constitué d'une pièce en forme de disque, mobile en translation axiale, lorsqu'il est sollicité par son actionneur 60. Il est agencé pour se plaquer contre le diffuseur 70 dans sa position fermée et s'éloigner de lui dans sa position ouverte. Ce clapet 50 comporte, dans sa face plane en regard du diffuseur 70, deux rainures 52 circulaires et concentriques débouchant dans des orifices de communication 51 prévus dans sa face opposée pour communiquer avec la chambre de distribution 45. Les rainures circulaires concentriques 52 du clapet 50 et 72 du diffuseur 70 sont disposées en quinconce de sorte qu'elles ne communiquent pas entre elles lorsque le clapet 50 est en position fermée, interdisant ainsi l'écoulement de fluide de son entrée 24 à sa sortie 25. Bien entendu, le nombre et la forme de ces rainures 52, 72 ne sont pas limités à cette configuration mais peuvent s'étendre à toute autre configuration adéquate. Dans cet exemple, les orifices de communication 51 sont formés de lamages cylindriques disposés en deux couronnes concentriques en regard des rainures 52. Ces orifices de communication 51 ont des diamètres différents selon leur emplacement. Le clapet 50 comporte également un alésage 53 central, traversant, formé de deux diamètres consécutifs et apte à recevoir un organe de fixation 54 démontable tel qu'une vis ou similaire.

L'actionneur 60 comporte par exemple une bobine 61 électromagnétique, appelée communément une ventouse électromagnétique, logée dans le corps 41 coopérant avec un plateau 62 magnétique couplé au clapet 50 par ledit organe de fixation 54. Lorsque la bobine 61 est alimentée électriquement, elle crée un champ magnétique qui attire le plateau 62 vers elle, ce plateau 62 entraînant avec lui le clapet 50 qui passe de sa position fermée à sa position ouverte. Le retour en position fermée est assuré par des moyens de rappel 90 qui déplacent le clapet 50 entraînant avec lui le plateau 62 lorsque la bobine 61 n'est plus alimentée. Bien entendu, on peut utiliser tout autre type d'actionneur approprié, tel qu'un électroaimant, un dispositif piézoélectrique, un vérin, etc.

La bobine 61 est montée par emboîtement dans un logement 63 de forme complémentaire prévu dans le corps 41 entre la chambre de distribution 45 et la tête 43. Elle est solidarisée au corps 41 par au moins un organe de fixation 64 démontable tel qu'une vis ou similaire traversant la tête 43 par un alésage 65 et vissé dans l'armature de la bobine 61. Au moins un organe d'étanchéité 66 tel qu'un joint torique est prévu entre la bobine 61 et le corps 41 et logé dans une rainure correspondante du logement 63 pour éviter une remontée éventuelle du fluide. Cette bobine 61 est alimentée électriquement par un câble électrique 67 traversant la tête 43 de la cartouche 40 par un alésage 68 rendu étanche par un presse-étoupe 69.

Le plateau 62 magnétique est porté par un axe 62a. Le plateau 62 a un diamètre sensiblement égal à celui de la bobine 61 et présente une face plane en regard de la bobine 61, apte à s'approcher d'elle sous l'action de son champ magnétique lorsqu'elle est alimentée électriquement. En position repos, lorsque la bobine 61 n'est pas alimentée, le plateau 62 est distant de la bobine 61 d'un intervalle appelé entrefer E. L'extrémité de l'axe 62a est emboîtée dans l'alésage 53 et solidarisée au clapet 50 par l'organe de fixation 54. La tête de cet organe de fixation 54 est logée dans l'alésage central 73 prévu dans le diffuseur 70 en restant mobile axialement pour suivre le déplacement du plateau 62. Cet alésage 73, formant également un orifice de sortie 47, est terminé par un plus petit diamètre que celui de la tête de l'organe de fixation 54, pour éviter de perdre cet organe de fixation 54 dans la vanne 10 en cas de dévissage accidentel. Le plateau 62 comporte également dans sa face plane deux petits perçages borgnes 62b pour y loger un outil empêchant sa rotation lors du serrage de l'organe de fixation 54.

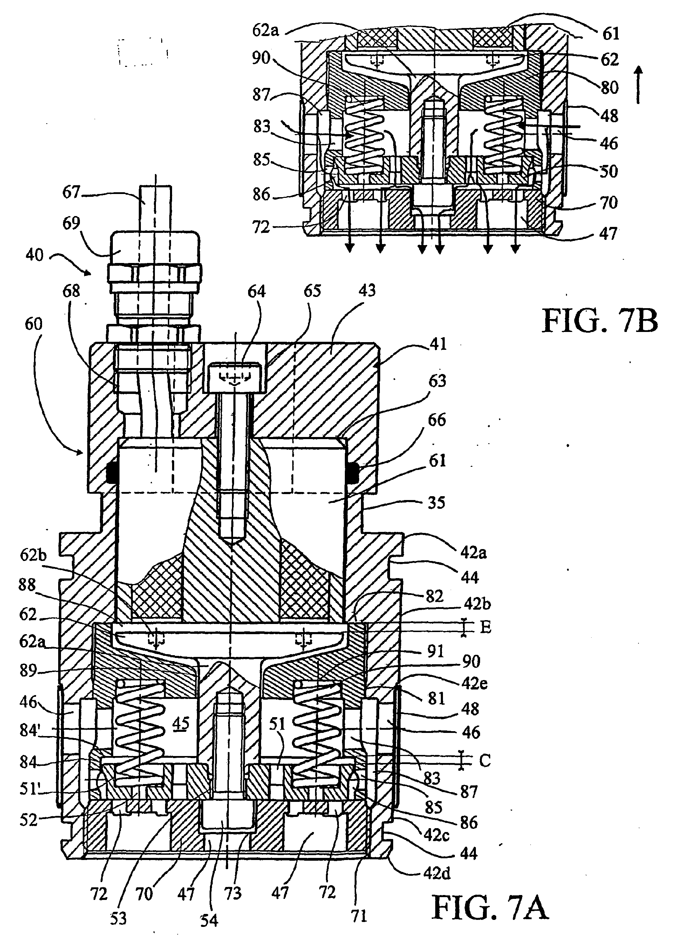

Une pièce intermédiaire 80 montée dans le corps 41 entre la bobine 61 et le diffuseur 70 vient compléter la cartouche 40. Elle est emboîtée dans un logement 81 (cf. fig. 7A) de forme complémentaire prévu dans le corps 41, de plus grand diamètre que le logement 63 recevant la bobine 61. Cette pièce intermédiaire 80 est bloquée axialement entre l'épaulement 82 reliant les deux logements 63, 81 et le diffuseur 70. Elle est creuse, définit la chambre de distribution 45 et comporte des orifices de passage 83 disposés radialement, en périphérie et au niveau des orifices d'entrée 46. Elle délimite un logement 88 dans lequel se déplace axialement le plateau 62 au travers d'un alésage central 89. Ce logement 88 est dimensionné suffisamment grand pour ne pas entraver le mouvement du plateau 62. Par contre, cette pièce intermédiaire 80 permet de définir précisément l'entrefer E existant entre le plateau 62 et la bobine 61. Elle comporte également un logement 84 dans lequel se déplace axialement le clapet 50 entre ses positions fermée et ouverte. Le jeu existant entre la profondeur de ce logement 84 et la hauteur du clapet 50 détermine la course C de son déplacement. Cette course C est délimitée par un épaulement 84' et est inférieure à l'entrefer E de manière à garantir la position ouverte du clapet 50, sans qu'il y ait collision entre le plateau 62 et la bobine 61. Des passages supplémentaires sont également ménagés dans cette pièce intermédiaire 80 pour augmenter le débit du fluide lorsque le clapet 50 est en position ouverte. Notamment, des orifices additionnels 85 sont disposés radialement, en périphérie et débouchant dans le logement 84 du clapet 50. Les diamètres en correspondance de ce logement 84 et du clapet 50 délimitent une gorge annulaire 86 d'écoulement du fluide. En correspondance des orifices de passage 83 et additionnels 85, le logement 81 comporte une cavité périphérique 87 dans laquelle débouchent les orifices d'entrée 46. Le nombre des orifices de passage 83 peut être différent du nombre des orifices d'entrée 46 de manière à obtenir la même perméabilité au fluide de l'ensemble "cartouche 40 et pièce intermédiaire 80" quelle que soit la position angulaire de la pièce intermédiaire 80 dans la cartouche 40. De ce fait, il n'est pas nécessaire de prévoir des moyens d'indexage ou de positionnement spécifiques entre eux, ce qui facilite l'assemblage de la cartouche 40.

Les moyens de rappel 90 sont, dans l'exemple représenté, constitués d'organes ressort, tels que des ressorts hélicoïdaux de compression, sachant que tout autre moyen équivalent peut convenir. Ils sont par exemple au nombre de quatre disposés axialement à équidistance de l'axe 62a du plateau 62 entre le clapet 50 et la pièce intermédiaire 80. Ils sont chacun tenus à leurs extrémités dans des lamages 51', 91 correspondants prévus respectivement dans le clapet 50 et la pièce intermédiaire 80. Il est à noter que les lamages 51' sont avantageusement constitués par certains orifices de communication 51 du clapet 50.

Le fonctionnement de la vanne 10 est décrit en référence aux figures 7A et 7B qui représentent respectivement la position fermée et la position ouverte du clapet 50. Au repos, lorsque la bobine 61 n'est pas alimentée électriquement, les organes ressort 90 plaquent le clapet 50 contre le diffuseur 70 et obstruent le passage du fluide de son entrée 24 vers sa sortie 25. Lorsque la bobine 61 est alimentée électriquement, le plateau 62 est attiré vers elle sous l'effet de son champ magnétique et entraîne le clapet 50 en comprimant les organes ressort 90 jusqu'à le plaquer contre la butée 84' qui délimite sa position ouverte. Le passage du fluide est ouvert et il peut librement s'écouler de l'entrée 24 à la sortie 25 de la vanne 10 en passant successivement par la gorge annulaire 31, les orifices d'entrée 46 de la cartouche 40, la cavité annulaire 87, les orifices de passage 83, la chambre de distribution 45, les orifices de communication 51, les rainures 52, et simultanément les orifices additionnels 85, la gorge annulaire 86, puis les rainures 72, les orifices de sortie 47 et la chambre collectrice 29. Les temps de cycle étant très courts, la course du clapet 50 doit être faible et les sections de passage doivent être suffisamment grandes pour assurer un débit de fluide suffisant et aisément contrôlable. Ainsi ce type de vanne 10 permet un dosage précis du fluide.

Le montage de la cartouche 40 s'effectue comme suit. La pièce intermédiaire 80, le plateau 62, le clapet 50 et les organes ressort 90 sont assemblés par l'organe de fixation 54 et forment un sous-ensemble. La bobine 61 est montée serrée dans son logement 63 préalablement équipé de l'organe d'étanchéité 66, puis solidarisée par son organe de fixation 64 au travers de l'alésage 65. En parallèle, le câble électrique 67 est monté au travers de l'alésage 68 du corps 41 rendu étanche par un presse-étoupe 69. Le sous-ensemble préalablement assemblé est monté dans le logement 81 puis bloqué axialement par vissage du diffuseur 70 dans le corps 41. La cartouche 40 est ensuite complétée par son organe filtrant 48, ses organes d'étanchéité 49 et la bride de serrage 32 pour être introduite dans le logement 30 du bloc support 21 de la vanne 10 à demeure sur la culasse 2 d'un moteur 1 par exemple. Un montage serré est assuré au niveau des organes d'étanchéité 49. La bride de serrage 32 est ensuite fixée au bloc support 21 par vissage des organes de fixation 33.

En cas d'usure des moyens de contrôle de l'écoulement du fluide et/ou d'encrassement de l'organe filtrant 48, l'opérateur chargé de la maintenance peut démonter rapidement la cartouche 40 en déconnectant le câble électrique 67, en dévissant les organes de fixation 33 et en utilisant la bride de serrage 32 et deux de ses organes de fixation 33 pour extraire la cartouche 40 de son logement 30. Lors de cette extraction, les organes d'étanchéité 49 et l'organe filtrant 48 restent solidaires de la cartouche 40. Il est alors facile pour cet opérateur de remplacer cette cartouche 40 usagée par une nouvelle en effectuant les opérations inverses. La cartouche 40 usagée peut être avantageusement recyclée avant d'être remise dans le circuit des pièces de rechange. A cet effet, elle peut être démontée, nettoyée et reconditionnée si besoin.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Cartouche (40) pour vanne (10) de contrôle d'un flux de fluide, notamment pour un moteur (1) à gaz, cette cartouche comportant un corps (41) creux comprenant une chambre de distribution (45) dans laquelle débouchent au moins un orifice d'entrée (46) et au moins un orifice de sortie (47), des organes d'étanchéité (49) disposés au moins de part et d'autre dudit orifice d'entrée (46) à la périphérie dudit corps (41), au moins un clapet (50) logé dans ladite chambre de distribution (45) et couplé à un actionneur (60) agencé pour déplacer ledit clapet (50) entre au moins une position ouverte dans laquelle lesdits orifices d'entrée et de sortie (46, 47) communiquent pour autoriser l'écoulement du fluide et une position fermée dans laquelle lesdits orifices d'entrée et de sortie ne communiquent pas pour interdire cet écoulement, ladite cartouche (40) formant une pièce monobloc de sorte à constituer une partie interchangeable de ladite vanne (10), destinée à être montée de manière amovible dans une partie fixe (20) de cette vanne (10), **caractérisée en ce que** un sous-ensemble dudit clapet (50) comporte une pièce intermédiaire (80) et un plateau magnetique (62) couplé audit clapet (50) et un sous-ensemble actionneur (60) comporte au moins une bobine électromagnétique (61), un entrefer (E) étant defini entre ledit plateau (62) et ladite bobine (61), lesdits sous-ensembles étant montés dans ledit corps (41) de manière démontable, la pièce intermédiaire (80) délimitant ladite chambre de distribution (45) et comportant un logement (84) dans lequel se déplace ledit clapet (50) et des orifices de passage (83) agencés pour mettre en communication ledit orifice d'entrée (46) avec ladite chambre de distribution (45), cette pièce intermédiaire (80) étant agencée pour définir ledit entrefer (E), et **en ce que** ledit corps (41) comporte en périphérie au moins un organe filtrant (48) disposé au moins en amont dudit orifice d'entrée (46) et monté de manière amovible sur ledit corps (41).

2. Cartouche selon la revendication 1, **caractérisée en ce qu'**elle comporte plusieurs orifices d'entrée (46) ménagés radialement et en périphérie dudit corps (41) et **en ce que** ledit organe filtrant (48) présente une forme annulaire et est agencé pour être assemblé audit corps (41) par emboîtement.

3. Cartouche selon la revendication 2, **caractérisée en ce que** ledit corps (41) comporte au moins un épaulement (42e) extérieur agencé pour former une butée axiale audit organe filtrant (48).

4. Cartouche selon la revendication 3, **caractérisée en ce qu'**au moins un desdits organes d'étanchéité (49) est agencé pour former une butée axiale audit organe filtrant (48) disposée du côté opposé audit épaulement (42e).

5. Cartouche selon la revendication 1, **caractérisée en ce qu'**elle comporte plusieurs orifices de sortie (47) ménagés axialement et en partie inférieure dudit corps (41).

6. Cartouche selon la revendication 5, **caractérisée en ce qu'**elle comporte un diffuseur (70) assemblé audit corps (41) de manière démontable et disposé en aval de ladite chambre de distribution (45), ce diffuseur (70) comportant lesdits orifices de sortie (47).

7. Cartouche selon la revendication 6, **caractérisée en ce que** ledit clapet (50) est monté mobile axialement dans ladite chambre de distribution (45) et comporte au moins un orifice de communication (51) traversant agencé pour mettre en communication lesdits orifices d'entrée et de sortie (46, 47) en position ouverte.

8. Cartouche selon la revendication 7, **caractérisée en ce que** ledit clapet (50) comporte au moins une face d'appui agencée pour se plaquer contre au moins une face d'appui dudit diffuseur (70), en position fermée, lesdits clapet (50) et diffuseur (70) comportant des passages de fluide décalés.

9. Cartouche selon la revendication 8, **caractérisée en ce que** lesdits passages de fluide décalés sont constitués de rainures (52, 72) circulaires et concentriques.

10. Cartouche selon la revendication 1, **caractérisée en ce que** ladite bobine (61) électromagnétique est alimentée par un câble électrique (67), et **en ce que** le plateau (62) est couplé audit clapet (50) et agencé pour être attiré vers ladite bobine (61) lorsqu'elle est alimentée électriquement de manière à déplacer ledit clapet (50) au moins de sa position fermée à sa position ouverte.

11. Cartouche selon la revendication 10, **caractérisée en ce que** ledit clapet (50) comporte des moyens de rappel (90) agencés pour le ramener dans sa position fermée lorsque ladite bobine (61) n'est plus alimentée électriquement, lesdits moyens de rappel comportant plusieurs organes ressort (90) disposés axialement dans ladite chambre de distribution (45) et **en ce que** ledit clapet (50) comporte plusieurs orifices de communication (51), au moins certains de ces orifices de communication formant également des logements (51') pour lesdits organes ressort (90).

12. Cartouche selon la revendication 11, **caractérisée en ce que** ladite pièce intermédiaire (80) comporte un logement (88) dans lequel se déplace ledit plateau (62) et un épaulement intérieur (84') formant une butée axiale limitant la course (C) dudit clapet (50) à une valeur inférieure audit entrefer (E).

13. Cartouche selon la revendication 1, **caractérisée en ce que** la pièce intermédiaire (80) comporte un nombre d'orifices de passage (83) différent du nombre desdits orifices d'entrée (46).

14. Cartouche selon la revendication 11, **caractérisée en ce que** la pièce intermédiaire (80), le plateau (62), le clapet (50) et les organes ressort (90) constituent un sous-ensemble pré-assemblé, agencé pour être monté dans ledit corps (41) entre ladite bobine (61) et ledit diffuseur (70).

15. Vanne (10) de contrôle d'un flux de fluide notamment pour un moteur (1) à gaz, comportant au moins une entrée de fluide (24) destinée à être raccordée à une alimentation de fluide (3), une sortie de fluide (25) destinée à être raccordée au circuit d'injection du fluide dans ledit moteur (1), et des moyens de contrôle de l'écoulement du fluide disposés entre lesdites entrée et sortie de fluide (24, 25), **caractérisée en ce qu'**elle est constituée d'au moins une partie fixe (20) destinée à être fixée à demeure sur ledit moteur (1) et comportant au moins lesdites entrée et sortie de fluide (24, 25), et d'au moins une partie amovible formant une cartouche (40) interchangeable selon l'une quelconque des revendications 1 à 14.

16. Vanne selon la revendication 15, **caractérisée en ce que** ladite partie fixe (20) comporte un bloc support (21) destiné à être assemblé audit moteur (1) par des moyens de fixation (22), ce bloc support (21) comportant un logement (30) apte à recevoir ladite cartouche (40) par emboîtement, lesdites entrée et sortie de fluide (24, 25) débouchant dans ledit logement (30).

17. Vanne selon la revendication 16, **caractérisée en ce que** ledit bloc support (21) comporte une gorge annulaire (31) ménagée dans ledit logement (30) et communiquant avec ladite entrée de fluide (24).

18. Vanne selon la revendication 16, **caractérisée en ce que** ladite sortie de fluide (25) comporte un tube diffuseur (26) s'étendant à l'extérieur dudit bloc support (21) et destiné à s'introduire dans ledit moteur (1).

19. Vanne selon la revendication 16, **caractérisée en ce que** ledit bloc support (21) comporte des organes d'étanchéité (27) prévus au moins dans les zones de raccordement desdites entrée et sortie de fluide (24, 25).

20. Vanne selon la revendication 16, **caractérisée en ce qu'**elle comporte des moyens de fixation (32) de ladite cartouche (40) dans ledit bloc support (21) agencés pour bloquer ladite cartouche (40) dans son logement (30) et agencés également pour extraire ladite cartouche (40) de son logement (30).

21. Vanne selon la revendication 20, **caractérisée en ce que** ces moyens de fixation comporte une bride de serrage (32) coopérant avec une rainure (35) prévue dans ladite cartouche (40) et assemblée audit bloc support (21) par des organes de fixation (33) démontables.

22. Vanne selon la revendication 16, **caractérisée en ce que** ladite cartouche (40) et ledit logement (30) ont des formes d'emboîtement complémentaires agencées pour assurer leur auto-centrage.

23. Moteur (1), notamment à gaz, comportant au moins une rampe d'alimentation (3) de fluide et un circuit d'injection de fluide dans les cylindres dudit moteur (1), **caractérisé en ce qu'**il comporte, pour au moins un cylindre, au moins une vanne (10) de contrôle du flux de fluide selon l'une quelconque des revendications 15 à 22.

## Claims

1. A cartridge (40) for a fluid flow control valve (10), especially for a gas engine (1), this cartridge comprising a hollow body (41) including a distribution chamber (45) into which at least one inlet opening (46) and at least one outlet opening (47) open, sealing elements (49) disposed at least on either side of the said inlet opening (46) and on the periphery of the said body (41), at least one flap valve (50) housed in the said distribution chamber (45) and coupled to a actuator (60) designed to move the said flap valve (50) between at least an open position in which the said inlet and outlet openings (46, 47) communicate to allow the flow of the fluid and a closed position in which the said inlet and outlet openings do not communicate in order to prevent this flow, the said cartridge (40) forming a monobloc piece so as to constitute an interchangeable part of the said valve (10), intended to be removably mounted in a fixed part (20) of this valve (10), **characterised in that** a sub-assembly of the said flap valve (50) comprises an intermediate piece (80) and a magnetic plate (62) coupled to the said flap valve (50) and an actuator sub-assembly (60) comprises at least one electromagnetic coil (61), an air gap (E) being defined between the said plate (62) and the said coil (61), the said subassemblies being removably mounted in the said body (41), the intermediate piece (80) delimiting the said distribution chamber (45) and comprising a housing (84) in which the said flap valve (50) moves and through-openings (83) designed to bring the said inlet opening (46) into communication with the said distribution chamber (45), this intermediate piece (80) being designed to define the said air gap (E), and **in that** the said body (41) comprises on its periphery at least one filter element (48) disposed at least upstream from the said inlet opening (46) and removably mounted on the said body (41).

2. A cartridge according to Claim 1, **characterised in that** it comprises several inlet openings (46) provided radially and on the periphery of the said body (41) and **in that** the said filter element (48) is ring-shaped and is designed to be attached to the said body (41) by fitting.

3. A cartridge according to Claim 2, **characterised in that** the said body (41) comprises at least one external shoulder (42e) designed to form an axial stop for the said filter element (48).

4. A cartridge according to Claim 3, **characterised in that** at least one of the said sealing elements (49) is designed to form an axial stop for the said filter element (48) disposed on the side opposite the said shoulder (42e).

5. A cartridge according to Claim 1, **characterised in that** it comprises several outlet openings (47) provided axially and at the lower part of the said body (41).

6. A cartridge according to Claim 5, **characterised in that** it comprises a diffuser (70) removably fitted to the said body (41) and disposed downstream from the said distribution chamber (45), this diffuser (70) comprising the said outlet openings (47).

7. A cartridge according to Claim 6, **characterised in that** the said flap valve (50) is mounted for axial movement in the said distribution chamber (45) and comprises at least one communication through-opening (51) designed to bring the said inlet and outlet openings (46, 47) into communication in the open position.

8. A cartridge according to Claim 7, **characterised in that** the said flap valve (50) comprises at least one support surface designed to lie flat against at least one support surface of the said diffuser (70) in the closed position, the said flap valve (50) and the said diffuser (70) comprising offset fluid paths.

9. A cartridge according to Claim 8, **characterised in that** the said offset fluid paths are formed from circular and concentric grooves (52, 72).

10. A cartridge according to Claim 1, **characterised in that** the said electromagnetic coil (61) is supplied by an electric cable (67), and **in that** the plate (62) is coupled to the said flap valve (50) and designed to be attracted towards the said coil (61) when it is supplied with electricity so as to move the said flap valve (50) at least from its closed position into its open position.

11. A cartridge according to Claim 10, **characterised in that** the said flap value (50) comprises return means (90) designed to return it into its closed position when the said coil (61) is no longer supplied with electricity, the said return means comprising several spring elements (90) disposed axially in the said distribution chamber (45) and **in that** the said flap valve (50) comprises several communication openings (51), at least some of these communication openings also forming housings (51') for the said spring elements (90).

12. A cartridge according to Claim 11, **characterised in that** the intermediate piece (80) comprises a housing (88) in which the said plate (62) moves and an internal shoulder (84') forming an axial stop limiting the travel (C) of the said flap valve (50) to a value less than the said air gap (E).

13. A cartridge according to Claim 1, **characterised in that** the intermediate piece (80) comprises a number of through-openings (83) that is different to the number of the said inlet openings (46).

14. A cartridge according to Claim 11, **characterised in that** the intermediate piece (80), the plate (62), the flap valve (50) and the spring elements (90) form a preassembled subunit, designed to be mounted into the said body (41) between the said coil (61) and the said diffuser (70).

15. A fluid control valve (10) especially for a gas engine (1), comprising at least one fluid inlet (24) intended to be connected to a fluid supply (3), a fluid outlet (25) intended to be connected to the fluid injection circuit in the said engine (1), and means for controlling the flow of the fluid, which are disposed between the said fluid inlet and outlet (24, 25), **characterised in that** it is formed by at least one fixed piece (20) intended to be permanently fixed onto the said engine (1) and comprising at least the said fluid inlet and outlet (24, 25), and at least one removable piece forming an interchangeable cartridge (40) according to any one of Claims 1 to 14.

16. A valve according to Claim 15, **characterised in that** the said fixed piece (20) comprises a support unit (21) intended to be fitted to the said engine (1) by attachment means (22), this support unit (21) comprising a housing (30) designed to receive the said cartridge (40) by fitting, the said fluid inlet and outlet (24, 25) opening into the said housing (30).

17. A valve according to Claim 16, **characterised in that** the said support unit (21) comprises an annular groove (31) provided in the said housing (30) and communicating with the said fluid inlet (24).

18. A valve according to Claim 16, **characterised in that** the said fluid outlet (25) comprises a diffuser tube (26) extending to the outside of the said support unit (21) and intended to be introduced into the said engine (1).

19. A valve according to Claim 16, **characterised in that** the said support unit (21) comprises sealing elements (27) provided at least in the connection zones of the said fluid inlet and outlet (24, 25).

20. A valve according to Claim 16, **characterised in that** it comprises means (32) for attaching the said cartridge (40) in the support unit (21), which are designed to lock the said cartridge (40) in its housing (30) and are also designed to remove the said cartridge (40) from its housing (30).

21. A valve according to Claim 20, **characterised in that** these attachment means comprise a tightening band (32) cooperating with a groove (35) provided in the said cartridge (40) and fixed to the said support unit (21) by detachable attachment elements (33).

22. A valve according to Claim 16, **characterised in that** the said cartridge (40) and the said housing (30) have complementary interlocking shapes that are designed to ensure their automatic centring.

23. An engine (1), especially a gas engine, comprising at least one fluid supply ramp (3) and a fluid injection circuit in the cylinders of the said engine (1), **characterised in that** it comprises, for at least one cylinder, at least one valve (10) for controlling the flow of fluid according to any one of Claims 15 to 22.

## Patentansprüche

1. Kartusche (40) für ein Ventil (10) zur Regelung eines Flüssigkeitsstromes, insbesondere für einen Gasmotor (1), wobei die Kartusche einen Hohlkörper (41), der eine Verteilungskammer umfasst (45), in die mindestens eine Eintrittsöffnung (46) und mindestens eine Austrittsöffnung (47) einmünden, Dichtungselemente (49), die mindestens beiderseits der Eintrittsöffnung (46) am Umfang des Körpers (41) angeordnet sind, und mindestens ein Sperrventil (50) aufweist, welches in der Verteilungskammer (45) angeordnet und mit einem Stellglied (60) verbunden ist, welches zur Verlagerung des Sperrventils (50) zwischen mindestens einer geöffneten Position, in der die Eintritts- und Austrittsöffnungen (46,47) miteinander in Verbindung stehen, um das Ablaufen der Flüssigkeit zuzulassen, und einer geschlossenen Position dient, in der die Eintritts- und Austrittsöffnungen nicht miteinander in Verbindung stehen, um das Ablaufen zu unterbinden, wobei die Kartusche (40) ein Monoblockteil derart bildet, dass es einen austauschbaren Teil des Ventils (10) darstellt, der dazu bestimmt ist, beweglich in einem festen Teil (20) des Ventils (10) montiert zu werden, **dadurch gekennzeichnet, dass** ein Unterelement des Sperrventils (50) ein Zwischenstück (80) und eine Magnetplatte (62) aufweist, die mit dem Sperrventil (50) verbunden ist, und dass ein Unterelement-Stellglied (60) mindestens eine elektromagnetische Spule (61) aufweist, wobei ein Luftspalt (E) zwischen der Platte (62) und der Spule (61) festgelegt ist, wobei die Untereinheiten in dem Körper (41) demontierbar angebracht sind, wobei das Zwischenstück (80) die Verteilungskammer (45) begrenzt und eine Aufnahme (84), worin sich das Sperrventil (50) verlagert, sowie Durchgangsöffnungen (83) aufweist, die angeordnet sind, um die Eintrittsöffnung (46) mit der Verteilungskammer (45) in Verbindung zu bringen, wobei das Zwischenstück (80) angeordnet ist, um den Luftspalt (E) festzulegen, und wobei der Körper (41) am Umfang mindestens ein Filterelement (48) aufweist, welches mindestens stromaufwärts der Eintrittsöffnung (46) angeordnet und entfernbar auf dem Körper (41) angeordnet ist.

2. Kartusche nach Anspruch 1, **dadurch gekennzeichnet, dass** sie mehrere Eintrittsöffnungen (46) aufweist, die radial und im Umfang des Körpers (41) eingearbeitet sind, und dass das Filterelement (48) eine Ringform aufweist und angeordnet ist, um durch Einpassung mit dem Körper (41) zusammengebaut zu werden.

3. Kartusche nach Anspruch 2, **dadurch gekennzeichnet, dass** dass der Körper (41) mindestens einen äußeren Ansatz (42e) aufweist, der angeordnet ist, um einen Axialanschlag an dem Filterelement (48) auszubilden.

4. Kartusche nach Anspruch 3 **dadurch gekennzeichnet, dass** mindestens eines der Dichtungselemente (49) angeordnet ist, um einen Axialanschlag an dem Filterelement (48) auszubilden, welches auf der entgegengesetzten Seite des Ansatzes (42e) angeordnet ist.

5. Kartusche nach Anspruch 1, **dadurch gekennzeichnet, dass** sie mehrere Austrittsöffnungen (47) aufweist, die axial und im unteren Teil des Körpers (41) eingearbeitet sind.

6. Kartusche nach Anspruch 5 **dadurch gekennzeichnet, dass** sie einen Diffusor (70) aufweist, der mit dem Körper (41) demontierbar zusammengebaut und stromabwärts der Verteilungskammer (45) angeordnet ist, wobei der Diffusor (70) die Austrittsöffnungen (47) aufweist.

7. Kartusche nach Anspruch 6, **dadurch gekennzeichnet, dass** das Sperrventil (50) axial bewegbar in der Verteilerkammer (45) angeordnet ist und mindestens eine durchgehende Verbindungsöffnung (51) aufweist, die angeordnet ist, um die Eintritts- und Austrittsöffnungen (46,47) in der geöffneten Position zu verbinden.

8. Kartusche nach Anspruch 7, **dadurch gekennzeichnet, dass** das Sperrventil (50) mindestens eine Auflagefläche aufweist, die angeordnet ist, um gegen mindestens eine Auflagefläche des Diffusors (70) zu drücken, und zwar in der geschlossenen Position,
wobei die Sperrventile (50) und der Diffusor (70) versetzte Flüssigkeitsdurchgänge aufweisen.

9. Kartusche nach Anspruch 8, **dadurch gekennzeichnet, dass** die versetzten Flüssigkeitsdurchgänge aus kreisförmigen und konzentrischen Nuten (52,72) bestehen.

10. Kartusche nach Anspruch 1, **dadurch gekennzeichnet, dass** die elektromagnetische Spule (61) durch ein Elektrokabel (67) versorgt wird, und dass die Platte (62) mit dem Sperrventil (50) verbunden und angeordnet ist, um in Richtung der Spule (61) angezogen zu werden, wenn sie so elektrisch versorgt wird, dass das Sperrventil (50) mindestens von seiner geschlossenen Position in seine geöffnete Position verlagert wird.

11. Kartusche nach Anspruch 10, **dadurch gekennzeichnet, dass** dass das Sperrventil (50) Rückholeinrichtungen (90) aufweist, die angeordnet sind, um es in seine geschlossene Position zurückzuholen, wenn die Spule (61) nicht mehr elektrisch versorgt wird,
wobei die Rückholeinrichtungen mehrere Federelemente (90) umfassen, die axial in der Verteilerkammer (45) angeordnet sind, wobei das Sperrventil (50) mehrere Verbindungsöffnungen (51) aufweist, die ebenfalls Aufnahmen (51') für die Federelemente (90) ausbilden.

12. Kartusche nach Anspruch 11, **dadurch gekennzeichnet, dass** das Zwischenstück (80) eine Aufnahme (88) aufweist, worin sich die Platte (62) verlagert, wobei ein Innenansatz (84') einen Axialanschlag ausbildet, der den Hub (C) des Sperrventils (50) auf einen Wert begrenzt, der unter demjenigen des Luftspaltes (E) liegt.

13. Kartusche nach Anspruch 1, **dadurch gekennzeichnet, dass** das Zwischenstück (80) eine Anzahl von Durchgangsöffnungen (83) aufweist, die sich von der Anzahl der Eintrittsöffnungen (46) unterscheidet.

14. Kartusche nach Anspruch 11, **dadurch gekennzeichnet, dass** das Zwischenstück (80), die Platte (62), das Sperrventil (50) und die Federelemente (90) eine vormontierte Untereinheit darstellen, die angeordnet ist, um in dem Körper (41) zwischen der Spule (61) und dem Diffusor (70) montiert zu werden.

15. Ventil (10) zur Regelung eines Flüssigkeitsstromes insbesondere für einen Gasmotor (1), der mindestens einen Flüssigkeitseingang (24), der dazu bestimmt ist, mit einer Versorgung von Flüssigkeit (3) verbunden zu werden, einen Flüssigkeitsausgang (25), der dazu bestimmt ist, mit dem Einspritzkreislauf der Flüssigkeit in den Motor (1) verbunden zu werden, und Einrichtungen zur Regelung des Flüssigkeitsablaufes aufweist, die zwischen den Flüssigkeitsein- und -ausgängen (24,25) angeordnet sind, **dadurch gekennzeichnet, dass** sie mindestens aus einem festen Teil (20) besteht, der dazu bestimmt ist, dauerhaft auf dem Motor (1) befestigt zu werden, und der mindestens die Flüssigkeitsein- und -ausgänge (24,25) und mindestens einen entfernbaren Teil aufweist, der eine auswechselbare Kartusche (40) nach einem der Ansprüche 1 bis 14 ausbildet.

16. Ventil nach Anspruch 15, **dadurch gekennzeichnet, dass** der feste Teil (20) einen Trägerblock (21) aufweist, der dazu bestimmt ist, mittels Befestigungseinrichtungen (22) an dem Motor (1) montiert zu werden, wobei der Trägerblock (21) eine Aufnahme (30) aufweist, die in der Lage ist, die Kartusche (40) durch Einpassung aufzunehmen, wobei die Flüssigkeitsein- und -ausgänge (24,25) in die Aufnahme (30) einmünden.

17. Ventil nach Anspruch 16, **dadurch gekennzeichnet, dass** der Trägerblock (21) eine in die Aufnahme (30) eingearbeitete Ringnut (31) aufweist, die mit dem Flüssigkeitseingang (24) in Verbindung steht.

18. Ventil nach Anspruch 16, **dadurch gekennzeichnet, dass** der Flüssigkeitsausgang (25) ein Verteilerrohr (26) aufweist, welches sich außerhalb des Trägerblockes (21) erstreckt und dazu bestimmt ist, in den Motor (1) eingeführt zu werden.

19. Ventil nach Anspruch 16, **dadurch gekennzeichnet, dass** der Trägerblock (21) Dichtungselemente (27) aufweist, die mindestens in den Verbindungszonen der Flüssigkeitsein- und -ausgänge (24,25) vorgesehen sind.

20. Ventil nach Anspruch 16, **dadurch gekennzeichnet, dass** es Befestigungseinrichtungen (32) der Kartusche (40) in dem Trägerblock (21) aufweist, die angeordnet sind, um die Kartusche (40) in ihrer Aufnahme (30) zu arretieren, und außerdem angeordnet sind, um die Kartusche (40) aus ihrer Aufnahme (30) herauszuziehen.

21. Ventil nach Anspruch 20, **dadurch gekennzeichnet, dass** dass die Befestigungseinrichtungen eine Spannbrücke (32) aufweisen, die mit einer Nut (35) zusammenwirkt, die in der Kartusche (40) vorgesehen ist, und die mittels demontierbarer Befestigungselemente (33) mit dem Trägerblock (21) zusammenmontiert ist.

22. Ventil nach Anspruch 16, **dadurch gekennzeichnet, dass** die Kartusche (40) und die Aufnahme (30) komplementäre Einpassungsformen aufweisen, um ihre automatische Zentrierung sicherzustellen.

23. Motor (1), insbesondere Gasmotor, der mindestens eine Flüssigkeitsversorgungsrampe (3) und einen Kreislauf zum Einspritzen von Flüssigkeit in die Zylinder des Motors (1) aufweist, **dadurch gekennzeichnet, dass** er für mindestens einen Zylinder mindestens ein Ventil (10) zur Regelung des Flüssigkeitsstromes nach einem der Ansprüche 15 bis 22 aufweist.
